# EUROPEAN PATENT SPECIFICATION

(11) **EP 3 885 198 B1**
(45) Date of publication and mention of the grant of the patent: **18.06.2025**
(21) Application number: 20460018.3
(22) Date of filing: 27.03.2020
(51) Int. Cl.: B60R 16/02, H02G 3/22

(54) **DRIVING ARRANGEMENT FOR A VEHICLE**
ANTRIEBSANORDNUNG FÜR EIN FAHRZEUG
AGENCEMENT DE PROPULSION POUR UN VÉHICULE

(43) Date of publication of application: 29.09.2021
(73) Proprietor: Valeo Siemens eAutomotive Poland Sp. z o.o., 43-500 Czechowice-Dziedzice (PL)
(72) Inventor: Chrapkiewicz, Miroslaw, 34-116 Spytkowice (PL); Zyrek, Damian, 34-326 Pietrzykowice (PL); Mynarski, Jakub, 43-300 Bielsko-Biala (PL)

(56) References cited:
- GB-A- 2 448 049
- US-A1- 2013 008 709
- US-A1- 2013 313 787
- US-A1- 2016 163 423
- US-B1- 7 641 271

## Description

The present invention refers to a driving arrangement, particularly for driving a vehicle, comprising an electric machine and a housing, in which the electric machine is arranged, the housing having an opening, through which a supply cable for the electric machine extends.

Driving arrangements that comprise an electric machine arranged within the housing have to be supplied with an electric current provided by one or multiple supply cables. Therefore, it is generally known to provide an opening in the housing, through which the supply cable extends.

Particularly with respect to automotive applications of the driving arrangement, a inside of the housing needs be protected against the ingress of water and/or dust. With respect to the feed-through of the supply cable into the housing, it has already been proposed to provide a sealing between the supply cable and the opening by potting with a bulk molding compound. However, potting is a difficult step of a manufacturing process of the driving arrangement and causes dirt when handling the compound.

US 2016/163423 discloses a driving arrangement for driving a vehicle according to the preamble of claim 1.

It is an object of the present invention to provide a driving arrangement with a simplified protection against the ingress of water and/or dust into a housing through the feedthrough of a supply cable.

According to the present invention the above object is solved by a driving arrangement according to claim 1.

The invention is based upon the consideration to seal the opening of the housing by means of the carrier, that can be adjusted to the specific shape of the opening, and to realize a sealing between the carrier and the supply cable by means of the sealing sleeve, through which the supply cable extends. Thereby, the feed-through of the supply cable through the opening is simplified since the carrier can be mounted on the wire and attached to the housing. The sleeve can be slid over the supply cable and arranged in the through-hole of the carrier in order to form the sealing device. Thereby, dirt and hardly automatable assembly steps that come along with conventional potting technologies can be avoided.

Preferably, the sealing sleeve is less rigid than the carrier. This allows to realize the mechanical stability of the feedthrough by means of the carrier on the one hand and to realize the function of sealing the supply cable against the carrier by means of the sealing sleeve on the other hand. Additionally or alternatively, the sealing sleeve may be less rigid than the supply cable. This allows to provide the sealing to rather rigid supply cables that are capable of conducting large amounts of current, particular when using the driving arrangement to drive the vehicle.

Preferably, the sealing sleeve is made of rubber and/or the carrier is made of plastic, e.g. polyamide.

Advantageously, the sealing sleeve comprises an angled portion on its side facing the outside of the housing. Thereby, the supply cable can be bent directly after passing through the opening in order to save mounting space within the driving arrangement. The angle portion may have an angle between 30° and 90°.

Preferably, the sealing sleeve comprises a sealing lip that extends circumferentially around the supply cable. Thereby, an effective sealing between the sealing sleeve and the supply cable can be realized. The sealing lip may be arranged at a free end of the sealing sleeve. Typically, the angled portion is arranged between the sealing lip and the housing.

With respect to the driving arrangement according to the invention, it is preferred that the sealing sleeve comprises a circumferential detent that overlaps the carrier on its side facing the inside of the housing. This allows an simplified fixation of the sealing sleeve at the carrier.

Advantageously, the sealing sleeve comprises a circumferential collar overlapping the carrier on its side facing the outside of the housing. Thereby, it can be avoided that the sealing sleeve is pushed too much into the through-hole of the carrier during assembly.

Preferably, the carrier comprises a plate portion that covers an edge of the opening. Furthermore, the through-hole may be surrounded by a cylindrical surface of the carrier that extends from the plate portion towards the inside of the housing.

According to a preferred embodiment, the sealing sleeve may comprise one or multiple circumferential sealing projections that abut the cylindrical surface. This realizes an effective axial sealing between the carrier and the sealing sleeve. Typically, the sealing projections are elastically deformed between the supply cable and the carrier.

With regard to the driving arrangement according to the invention, it is furthermore preferred that the sealing device comprises a sealing ring arranged between the carrier and the opening. The sealing ring provides an effective axial sealing between the opening and the carrier. Typically, the sealing ring extends along an outside surface that is opposite to the cylindrical surface surrounding the through-hole.

In order to simplify the mounting of the sealing device within the opening, it is preferred that the carrier is fixed to the housing by means of a snap-fit. Therein, one or multiple snapping means may extend from the carrier, particular from the plate portion, towards the inside of the housing.

Preferably, the carrier and/or the opening has or have the shape of the radiused triangle. This allows an optimized shape of the feedthrough when using three supply cables with respect to provide a three- or six-phase alternating current of the electric machine, as described in detail below.

Preferably, the carrier has one or two further through-holes.

More preferably, a further sealing sleeve is arranged in each further through-hole and a further supply cable extends through the further sealing sleeve. Alternatively, a further sealing sleeve is arranged in one of the further through-holes and a further supply cable extends through the further sealing sleeve, wherein the other through-hole is closed. Alternatively, the further through-hole or the further through-holes is or are closed. Thereby, a uniform housing may be adapted to different phase configurations of the electric machine. The through-hole may be closed by a plug.

Typically the or each through-hole is arranged within corner portions of the radiused triangle.

It is possible that the housing comprises a further opening through which a supply cable for the electric machine extends, wherein a further sealing device is mounted in the further opening. Therein, six supply cables may be provided, wherein three supply cables extend through the first opening and three supply cables extend to further opening. Thereby, a six-phase electric machine can be supplied. Alternatively, three supply cables are provided, wherein one supply cable may extend though one of the openings and two supply cables extend through the other opening. Thereby, a three-phase electric machine can be supplied.

All statements referring to the opening, the supply cable, the sealing sleeve and the sealing device may apply correspondingly to the further opening, the further supply cables, the further sealing sleeves or the further sealing device, respectively.

Additionally, the driving arrangement may further comprise an inverter, wherein the or each supply cable is part of an electrical connection between the inverter and the electric machine. Preferably, the sealing device or the sealing devices are arranged within a maintenance box, formed by an outer surface the housing and a removable cover element.

Further details and advantages are disclosed in the following embodiments, wherein reference is made to the drawings. The drawings are schematic and show:
- Fig. 1: a perspective view of a first embodiment of the driving arrangement according to the invention;
- Fig. 2: a detailed view of the openings of the housing according to the first embodiment;
- Fig. 3: a frontal view on the housing according to the first embodiment;
- Fig. 4: a cross-sectional view of a sealing device depicted in Fig. 3;
- Fig. 5: a detailed view of a sealing sleeve of the sealing device depicted in Fig. 4;
- Fig. 6: a first detailed view of the carrier of the sealing device depicted in Fig. 4;
- Fig. 7: a second detailed view of the carrier of the sealing device depicted in Fig. 4;
- Fig. 8: a detailed view of the sealing ring of the sealing device depicted in Fig. 4;
- Fig. 9: a perspective view of the sealing devices according to a second embodiment; and
- Fig. 10: a perspective view of the sealing devices according to a third embodiment.

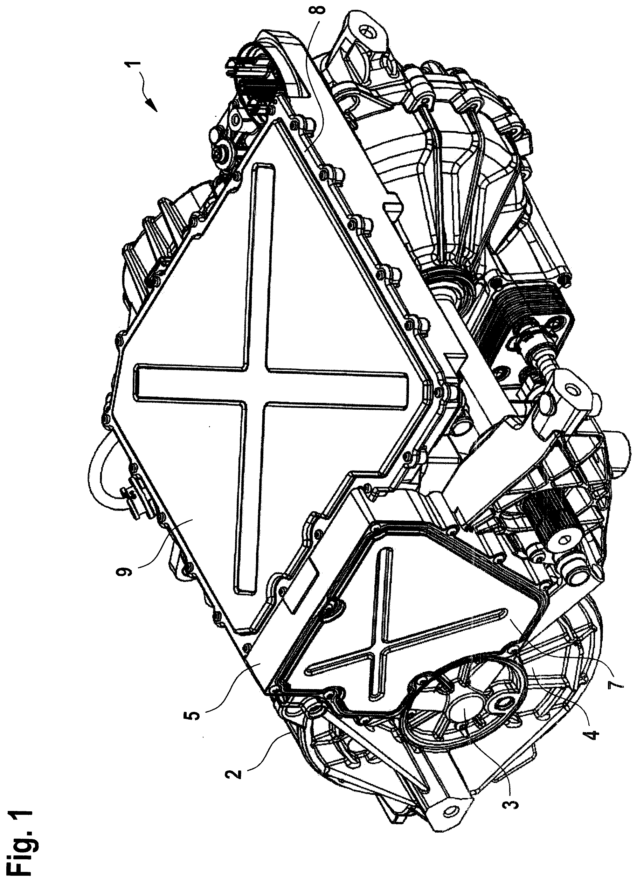

Fig. 1 is a perspective view of a first embodiment of a driving arrangement 1. The driving arrangement 1 is configured to drive the vehicle, such as battery electric vehicle or hybrid vehicle.

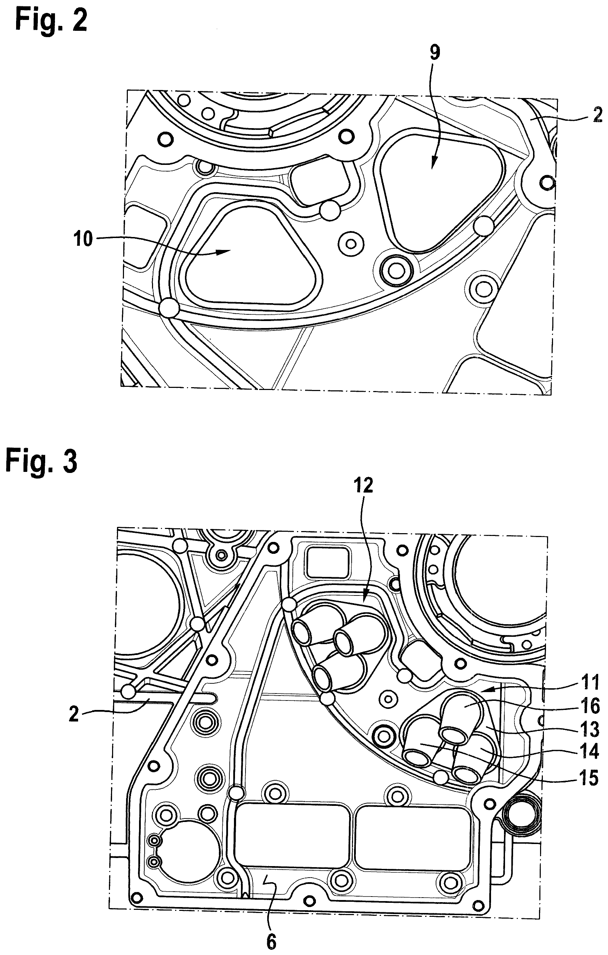

The driving arrangement 1 comprises an electric machine (hidden in fig. 1) and a housing 2, in which the electric machine is arranged. A shaft 3 that connects the electric machine with the gearbox (hidden in fig. 1) is visible in Fig. 1, which is supported by a bearing arranged within an end shield portion 4 of the housing 2. A maintenance box 5 of the driving arrangement 1 is formed by an outer surface 6 (see Fig. 3) of the housing 2 and a removable cover 7. Furthermore, the driving arrangement 1 comprises an inverter box 8, which is formed by a further outer surface (hidden in Fig. 1) of the housing 2 and a further removable cover 9. Within the inverter box 8 an inverter (hidden in fig. 1) is disposed that provides a multiphase AC current for supplying stator windings of the electric machine.

Fig. 2 is a detailed view of openings 9, 10 of the housing 2 according to the first embodiment. As can be seen the housing has a first opening 9 and a second opening 10 that have the shape of a radiused triangle. Through the openings 9, 10 supply cables (not shown in Fig. 1 to Fig. 8) for the electric machine extend. In the present embodiment, the supply cables are a part of an electric connection between the inverter and the electric machine. In the present embodiment, the electric machine in a six-phase synchronous machine, so that six supply cables are provided.

Fig. 3 is a frontal view of the housing 2 according to the first embodiment.

The drive arrangement 1 comprises a first sealing device 11 mounted within the first opening 9 (see Fig. 2) and the second sealing device 12 mounted within the second opening 10. The sealing devices 11, 12 are substantially identical so that they are described in detail with reference to the first sealing device 11 only.

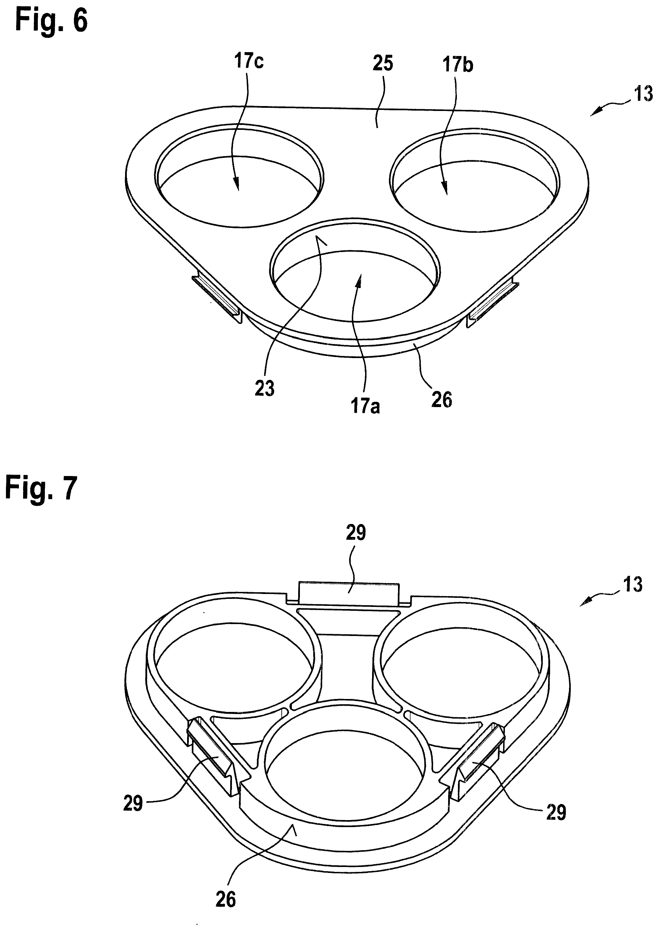

The sealing device 11 comprises a carrier 13, a first sealing sleeve 14, a second sealing sleep 15 and a third sealing sleeve 16. Through each sealing sleeve 14, 15, 16 a supply cable extends from the outside of the housing 2 into the inside of the housing 2 in order to connect the electric machine. Each sealing sleeve 14, 15, 16 is arranged within one of three through-holes 17a, 17b, 17c (see Fig. 6) of the sealing device 11. The sealing sleeves 14, 15, 16 and made of rubber, whereas the carrier 13 is made of polyamide and, thus, more rigid than the sealing sleeves 14, 15, 16.

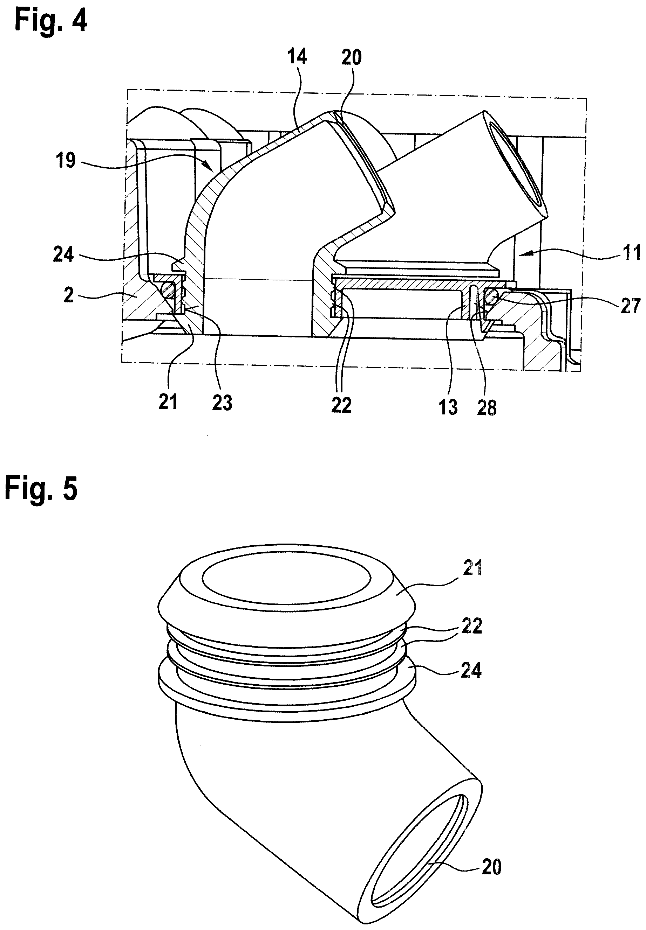

Fig. 4 is cross-sectional view of the sealing device 11. In the following the sealing sleeve 14, also shown in a perspective view in Fig. 5, is described representatively for the other sealing sleeves 15, 16 of the sealing device 11.

The sealing sleeve 14 comprises an angled portion 19 which allows the sealing sleeve 14 to follow are corresponding angled shape of the highly rigid cable that extends therethrough. The sealing sleeve 14 of the comprises a sealing lip 20 on its free and on the side of the housing to being opposite to the electric machine. Therein, the angled portion 19 is arranged between the sealing lip 20 and the housing 2.

The other free end of the sealing sleeve 14 comprises a circumferential detent that overlaps the carrier 13 on its side facing the inside of the housing 2. Furthermore, the sealing sleeve 14 comprises two circumferential sealing projections 22 that about a cylindrical surface 23 of the carrier 13. Additionally, the sealing sleeve 14 comprises a circumferential collar 24 overlapping the carrier 13 on its side facing the outside of the housing 2.

Fig. 6 and fig. 7 are each a perspective view of the carrier 13. As can be seen the carrier 13 comprises a plate portion 25 from which for each through-hole 17a, 17b, 17c the cylindrical surface 23 extends into the inside of the housing 2. On its side facing the inside of the housing 2 the carrier 13 comprises outside surfaces 26 that the surround of the through-holes 17a, 17b, 17c partially.

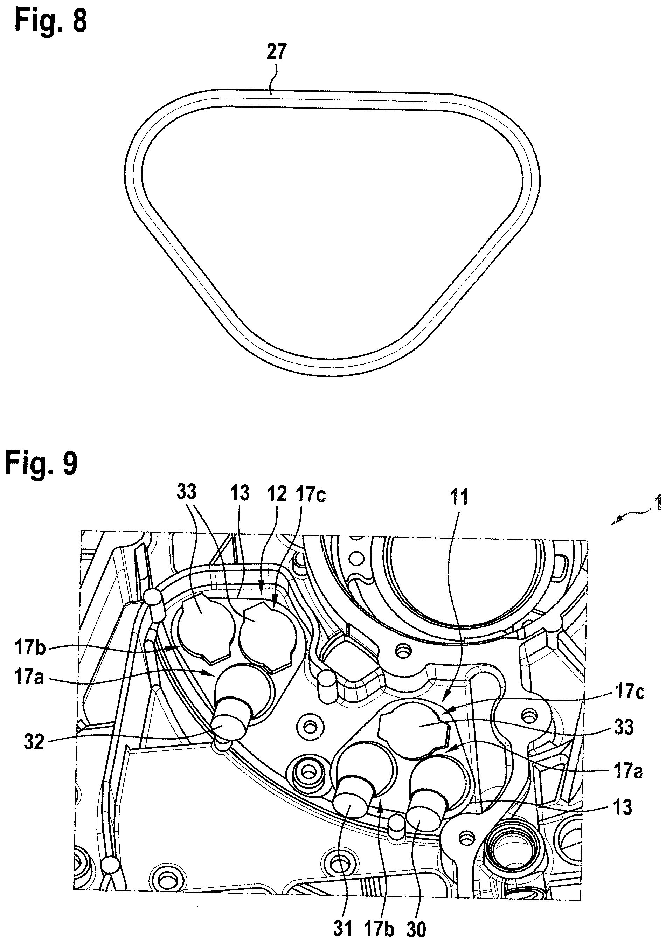

Again with reference to Fig. 4, it can be seen that a sealing ring 27, which is shown in a perspective view in Fig. 8, is arranged between the carrier 13 and an edge 28 of the opening 9. The sealing ring 27 is disposed along the outer surfaces 26 of the sealing device 11.

The sealing device 11 is fixed to the housing 2 by means of a snap-fit that is realized by 3 snapping means 29 (see Fig. 7) that are arranged between the outer surfaces 26.

Fig. 9 is a perspective view of the sealing devices 11, 12 according to a second embodiment of a driving arrangement 1. As far as nothing else is mentioned in the following, the second embodiment corresponds to the first embodiment.

In the second embodiment the electric machine is a three-phase synchronous machine, so that three supply cables 30, 31, 32 are provided. Therein, the supply cable 30 extends through the first through-hole 17a and the supply cable 31 extends through the second through-hole 17b of the first sealing device 11. The third through-hole 17c is closed by means of a plug 33. The supply cable 32 extends through the first through-hole 17a of the second sealing device 12. The second through-hole 17b and the third through-hole 17c of the second sealing device 12 are closed by means of plugs 33. Thus, the same housing 2 and the same carrier 13 can be used for a six-phase and a three-phase electric machine.

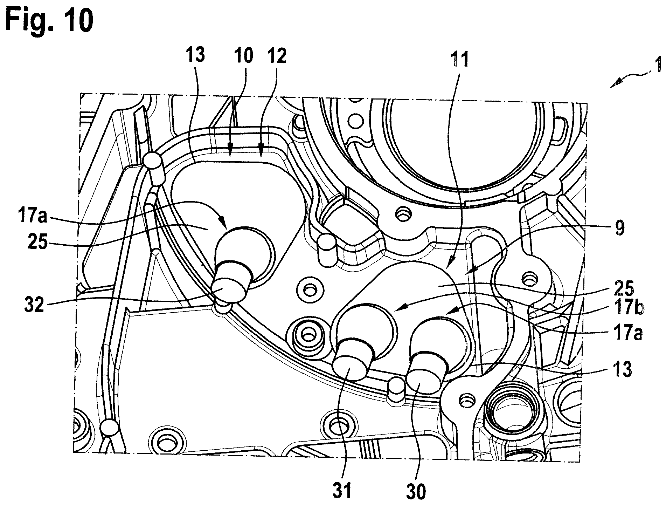

Fig. 10 is a perspective view of the sealing devices 11, 12 according to a third embodiment of a driving arrangement 1. As far as nothing else is mentioned in the following, the second embodiment corresponds to the first embodiment.

Instead of using plugs 33 for closing the third through-hole 17c of the first sealing device 11 and the second and third through-holes 17b, 17c of the second sealing device 12, the number of through-holes 17a, 17b of a respective sealing device 11, 12 corresponds to the number of supply cables 30, 31, 22 that extend through the opening 9, 10, in which the sealing device 11, 12 is mounted. The plate portion 25 of a respective carrier 13 extends closed in a respective corner portions, where no through-hole is provided.

## Claims

1. Driving arrangement (1), particularly for driving a vehicle, comprising
- an electric machine,
- a housing (2), in which the electric machine is arranged, the housing (2) having an opening (9), through which a supply cable (30) for the electric machine extends, and
- a sealing device (11) that comprises
- a carrier (13) having a through-hole (17a) and
- a sealing sleeve (14) arranged within the through-hole (17a), wherein the supply cable (30) extends through the sealing sleeve (14)
**characterized in that**
the carrier (13) is mounted within the opening (9) and comprises a plate portion (25) that covers an edge (28) of the opening (9), wherein the through-hole (17a) is surrounded by a cylindrical surface (23) of the carrier (13) that extends from the plate portion (25) towards the inside of the housing (2), wherein the sealing sleeve (14) comprises one or multiple circumferential sealing projections (22) that abut the cylindrical surface (23).

2. Driving arrangement according to claim 1, wherein
the sealing sleeve (14) is less rigid than the carrier (13) and/or the supply cable (30).

3. Driving arrangement according to claim 1 or 2, wherein
the sealing sleeve comprises an angled portion (19) on its side facing the outside of the housing (2).

4. Driving arrangement according to any of the preceding claims, wherein
the sealing sleeve (14) comprises a sealing lip (20) that extends circumferentially around the supply cable (30).

5. Driving arrangement according to claims 3 and 4, wherein
wherein the angled portion (19) is arranged between the sealing lip (20) and the housing (2).

6. Driving arrangement according to any of the preceding claims, wherein
the sealing sleeve (14) comprises a circumferential detent (21) that overlaps the carrier (13) on its side facing the inside of the housing (2).

7. Driving arrangement according to any of the preceding claims, wherein
the sealing projection (22) is or the respective sealing projections (22) are elastically deformed between the supply cable (30) and the sealing sleeve (14)..

8. Driving arrangement according to any of the preceding claims, wherein
the sealing device (11) comprises a sealing ring (27) arranged between the carrier (13) and the opening (9).

9. Driving arrangement according to any of the preceding claims, wherein
the carrier (13) is fixed to the housing by means of a snap-fit.

10. Driving arrangement according to any of the preceding claims, wherein
the carrier (13) and/or the opening (9) has or have the shape of a radiused triangle.

11. Driving arrangement according to any of the preceding claims, wherein
the carrier (13) has one or two further through-holes (17b, 17c).

12. Driving arrangement according to claim 11, wherein
- a further sealing sleeve (15, 16) is arranged in each further through-hole (17b, 17c) and a further supply cable (31) extends through the further sealing sleeve (15, 16),
- a further sealing sleeve (15) is arranged in one of the two further through-holes (17b) and a further supply cable (31) extends through the further sealing sleeve (15), wherein the other one of the two further through-holes (17c) is closed or
- the further through-hole (17b) or the further through-holes (17b, 17c) is or are closed.

13. Driving arrangement according to any of the preceding claims, wherein
the housing (2) comprises a further opening (10) through which a supply cable (32) for the electric machine extends, wherein a further sealing device (12) is mounted in the further opening (10).

14. Driving arrangement according to any of the preceding claims, wherein
the opening (9) or the openings (9, 10) are located within an end-shield portion (4) of the housing (2).

15. Driving arrangement according to any of the preceding claims, further comprising
an inverter, wherein the or each supply cable (30, 31, 32) is part of an electrical connection between the inverter and the electric machine.

## Patentansprüche

1. Antriebsanordnung (1), insbesondere zum Antreiben eines Fahrzeugs, umfassend:
- eine elektrische Maschine,
- ein Gehäuse (2), in dem die elektrische Maschine angeordnet ist, wobei das Gehäuse (2) eine Öffnung (9) aufweist, durch die ein Versorgungskabel (30) für die elektrische Maschine hindurchgeführt ist, und
- eine Dichtungseinrichtung (11), die umfasst:
- einen Träger (13) mit einer Durchgangsöffnung (17a) und
- eine Dichtungshülse (14), die innerhalb der Durchgangsöffnung (17a) angeordnet ist,
wobei das Versorgungskabel (30) durch die Dichtungshülse (14) hindurchgeführt ist,
**dadurch gekennzeichnet, dass**
der Träger (13) innerhalb der Öffnung (9) angebracht ist und einen Plattenabschnitt (25) umfasst, der einen Rand (28) der Öffnung (9) abdeckt, wobei die Durchgangsöffnung (17a) von einer zylindrischen Fläche (23) des Trägers (13) umgeben ist, die sich von dem Plattenabschnitt (25) in Richtung des Inneren des Gehäuses (2) erstreckt, wobei die Dichtungshülse (14) einen oder mehrere umlaufende Dichtvorsprünge (22) umfasst, die an der zylindrischen Fläche (23) anliegen.

2. Antriebsanordnung nach Anspruch 1, wobei die Dichtungshülse (14) weniger steif ist als der Träger (13) und/oder das Versorgungskabel (30).

3. Antriebsanordnung nach Anspruch 1 oder 2, wobei die Dichtungshülse einen abgewinkelten Abschnitt (19) auf ihrer der Außenseite des Gehäuses (2) zugewandten Seite umfasst.

4. Antriebsanordnung nach einem der vorhergehenden Ansprüche, wobei die Dichtungshülse (14) eine Dichtlippe (20) umfasst, die sich umlaufend um das Versorgungskabel (30) erstreckt.

5. Antriebsanordnung nach den Ansprüchen 3 und 4, wobei der abgewinkelte Abschnitt (19) zwischen der Dichtlippe (20) und dem Gehäuse (2) angeordnet ist.

6. Antriebsanordnung nach einem der vorhergehenden Ansprüche, wobei die Dichtungshülse (14) eine umlaufende Rastnase (21) umfasst, die auf ihrer dem Inneren des Gehäuses (2) zugewandten Seite den Träger (13) überlappt.

7. Antriebsanordnung nach einem der vorhergehenden Ansprüche, wobei der Dichtvorsprung (22) oder die jeweiligen Dichtvorsprünge (22) zwischen dem Versorgungskabel (30) und der Dichtungshülse (14) elastisch verformt ist bzw. sind.

8. Antriebsanordnung nach einem der vorhergehenden Ansprüche, wobei die Dichtungseinrichtung (11) einen Dichtungsring (27) umfasst, der zwischen dem Träger (13) und der Öffnung (9) angeordnet ist.

9. Antriebsanordnung nach einem der vorhergehenden Ansprüche, wobei der Träger (13) mittels Schnappverbindung an dem Gehäuse befestigt ist.

10. Antriebsanordnung nach einem der vorhergehenden Ansprüche, wobei der Träger (13) und/oder die Öffnung (9) die Form eines abgerundeten Dreiecks aufweist bzw. aufweisen.

11. Antriebsanordnung nach einem der vorhergehenden Ansprüche, wobei der Träger (13) eine oder zwei weitere Durchgangsöffnungen (17b, 17c) aufweist.

12. Antriebsanordnung nach Anspruch 11, wobei:
- in jeder weiteren Durchgangsöffnung (17b, 17c) eine weitere Dichtungshülse (15, 16) angeordnet ist und ein weiteres Versorgungskabel (31) durch die weitere Dichtungshülse (15, 16) hindurchgeführt ist,
- in einer der zwei weiteren Durchgangsöffnungen (17b) eine weitere Dichtungshülse (15) angeordnet ist und ein weiteres Versorgungskabel (31) durch die weitere Dichtungshülse (15) hindurchgeführt ist, wobei die andere der zwei weiteren Durchgangsöffnungen (17c) verschlossen ist, oder
- die weitere Durchgangsöffnung (17b) oder die weiteren Durchgangsöffnungen (17b, 17c) verschlossen ist bzw. sind.

13. Antriebsanordnung nach einem der vorhergehenden Ansprüche, wobei das Gehäuse (2) eine weitere Öffnung (10) umfasst, durch die ein Versorgungskabel (32) für die elektrische Maschine hindurchgeführt ist, wobei in der weiteren Öffnung (10) eine weitere Dichtungseinrichtung (12) angebracht ist.

14. Antriebsanordnung nach einem der vorhergehenden Ansprüche, wobei die Öffnung (9) oder die Öffnungen (9, 10) innerhalb eines Endschildabschnitts (4) des Gehäuses (2) angeordnet ist bzw. sind.

15. Antriebsanordnung nach einem der vorhergehenden Ansprüche, ferner umfassend einen Wechselrichter, wobei das oder jedes Versorgungskabel (30, 31, 32) Teil einer elektrischen Verbindung zwischen dem Wechselrichter und der elektrischen Maschine ist.

## Revendications

1. Dispositif d'entraînement (1), en particulier pour entraîner un véhicule, comprenant :
- une machine électrique,
- un boîtier (2) dans lequel la machine électrique est disposée, le boîtier (2) comportant une ouverture (9) à travers laquelle passe un câble d'alimentation (30) pour la machine électrique, et
- un dispositif d'étanchéité (11) qui comprend :
- un support (13) ayant un trou traversant (17a) et
- un manchon d'étanchéité (14) disposé à l'intérieur du trou traversant (17a),
le câble d'alimentation (30) passant à travers le manchon d'étanchéité (14),
**caractérisé en ce que**
le support (13) est monté à l'intérieur de l'ouverture (9) et comprend une partie de plaque (25) qui recouvre un bord (28) de l'ouverture (9), le trou traversant (17a) étant entouré d'une surface cylindrique (23) du support (13) qui s'étend de la partie de plaque (25) vers l'intérieur du boîtier (2), le manchon d'étanchéité (14) comprenant une ou plusieurs saillies d'étanchéité circonférentielles (22) qui reposent contre la surface cylindrique (23).

2. Dispositif d'entraînement selon la revendication 1, dans lequel le manchon d'étanchéité (14) est moins rigide que le support (13) et/ou le câble d'alimentation (30).

3. Dispositif d'entraînement selon la revendication 1 ou 2, dans lequel le manchon d'étanchéité comprend une partie coudée (19) sur son côté faisant face à l'extérieur du boîtier (2).

4. Dispositif d'entraînement selon l'une quelconque des revendications précédentes, dans lequel le manchon d'étanchéité (14) comprend une lèvre d'étanchéité (20) qui s'étend circon-férentiellement autour du câble d'alimentation (30).

5. Dispositif d'entraînement selon les revendications 3 et 4, dans lequel la partie coudée (19) est disposée entre la lèvre d'étanchéité (20) et le boîtier (2).

6. Dispositif d'entraînement selon l'une quelconque des revendications précédentes, dans lequel le manchon d'étanchéité (14) comprend un cliquet circonférentiel (21) qui chevauche le support (13) sur son côté faisant face à l'intérieur du boîtier (2).

7. Dispositif d'entraînement selon l'une quelconque des revendications précédentes, dans lequel la saillie d'étanchéité (22) est ou les saillies d'étanchéité respectives (22) sont déformées élastiquement entre le câble d'alimentation (30) et le manchon d'étanchéité (14).

8. Dispositif d'entraînement selon l'une quelconque des revendications précédentes, dans lequel le dispositif d'étanchéité (11) comprend une bague d'étanchéité (27) disposée entre le support (13) et l'ouverture (9).

9. Dispositif d'entraînement selon l'une quelconque des revendications précédentes, dans lequel le support (13) est fixé au boîtier au moyen d'un encliquetage.

10. Dispositif d'entraînement selon l'une quelconque des revendications précédentes, dans lequel le support (13) et/ou l'ouverture (9) a ou ont la forme d'un triangle arrondi.

11. Dispositif d'entraînement selon l'une quelconque des revendications précédentes, dans lequel le support (13) comporte un ou deux autres trous traversants (17b, 17c).

12. Dispositif d'entraînement selon la revendication 11, dans lequel :
- un autre manchon d'étanchéité (15, 16) est disposé dans chaque autre trou traversant (17b, 17c) et un autre câble d'alimentation (31) passe à travers l'autre manchon d'étanchéité (15, 16),
- un autre manchon d'étanchéité (15) est disposé dans l'un des deux autres trous traversants (17b) et un autre câble d'alimentation (31) passe à travers l'autre manchon d'étanchéité (15), l'autre des deux autres trous traversants (17c) étant fermé, ou
- l'autre trou traversant (17b) ou les autres trous traversants (17b, 17c) est ou sont fermés.

13. Dispositif d'entraînement selon l'une quelconque des revendications précédentes, dans lequel le boîtier (2) comprend une autre ouverture (10) à travers laquelle passe un câble d'alimentation (32) pour la machine électrique, un autre dispositif d'étanchéité (12) étant monté dans l'autre ouverture (10).

14. Dispositif d'entraînement selon l'une quelconque des revendications précédentes, dans lequel l'ouverture (9) ou les ouvertures (9, 10) sont situées à l'intérieur d'une partie de bouclier d'extrémité (4) du boîtier (2).

15. Dispositif d'entraînement selon l'une quelconque des revendications précédentes, comprenant en outre un onduleur, le ou chaque câble d'alimentation (30, 31, 32) faisant partie d'une connexion électrique entre l'onduleur et la machine électrique.
